# EUROPÄISCHE PATENTSCHRIFT

(11) **EP 3 950 349 B1**
(45) Veröffentlichungstag und Bekanntmachung des Hinweises auf die Patenterteilung: **02.10.2024**
(21) Anmeldenummer: 21190130.1
(22) Anmeldetag: 06.08.2021
(51) Int. Cl.: B32B 37/06, B32B 37/08, B32B 37/10

(54) **VERFAHREN UND VORRICHTUNG ZUM LAMINIEREN VON MEHREREN FOLIENARTIGEN SCHICHTEN ZU EINEM HOMOGENEN SCHICHTVERBUND**
METHOD AND DEVICE FOR LAMINATING A PLURALITY OF SHEET-LIKE LAYERS TO FORM A HOMOGENEOUS LAYERED COMPOSITE
PROCÉDÉ ET DISPOSITIF DE LAMINAGE DE PLUSIEURS COUCHES DE TYPE FILM EN UN COMPOSITE HOMOGÈNE

(30) Priorität: 07.08.2020 DE 102020120898
(43) Veröffentlichungstag der Anmeldung: 09.02.2022
(73) Patentinhaber: Bundesdruckerei GmbH, 10969 Berlin (DE)
(72) Erfinder: Siebert, Martin, 10965 Berlin (DE)
(74) Vertreter: Mammel und Maser Patentanwälte PartG mbB

(56) Entgegenhaltungen:
- DE-B3- 10 319 752
- DE-B4- 102008 021 796
- DE-C1- 3 724 011
- US-A- 4 670 080
- US-A- 4 897 147
- US-A1- 2011 226 408

## Beschreibung

Die Erfindung betrifft ein Verfahren und eine Vorrichtung zum Laminieren von mehreren folienartigen Schichten zu einem homogenen Schichtverbund.

Aus der DE 10 2017 112 509 A1 ist eine Laminierstation zum Laminieren von mehreren folienartigen Schichten aus einem thermoplastischen Material zu einem homogenen Schichtverbund bekannt. Die einzelnen Schichten werden übereinanderliegend von einer Laminierkassette aufgenommen. Ein Heizsegment wird zur Laminierkassette positioniert. Die folienartigen Schichten aus thermoplastischem Material werden unter Temperatur und Druck miteinander zu einem homogenen Schichtverbund laminiert. Darauffolgend wird diesem Schichtverbund in der Laminierkassette ein Kühlsegment zugeführt. Nach dem Abkühlen des Schichtverbundes wird die Laminierkassette aus der Laminierstation entnommen. Dabei ist vorgesehen, dass der homogene Schichtverbund auf eine Raumtemperatur abgekühlt wird, um darauffolgend der weiteren Bearbeitungsstation zugeführt zu werden.

Aus der US 2011/0226408 A1 ist eine Laminierstation zum Laminieren von mehreren folienartigen Schichten aus einem thermoplastischen Material bekannt. Diese Laminiervorrichtung umfasst eine Heizstation mit zwei Heizsegmenten. Dieser Heizstation nachfolgend ist eine Kühlstation vorgesehen, welche ebenfalls zwei Kühlsegmente aufweist. Mittels einer Steuerung werden die Heizsegmente und die Kühlsegmente angesteuert.

Da die Aufheizung der folienartigen Schichten zum Laminieren zu einem homogenen Schichtverbund eine ähnliche Prozesszeit erfordert wie das Abkühlen des Schichtverbundes auf Raumtemperatur, ist die Anzahl der Heizsegmente bzw. der Taktschritte in der Heizstation und die Anzahl der Kühlsegmente bzw. Taktschritte in der Kühlstation gleich.

Aus der DE 37 24 011 C1 ist ein Verfahren und eine Vorrichtung zum Kaschieren von Bahnen in einer Verklebungspresse bekannt. Zwischen einem oberen und unteren Transportband werden die zu verbindenden Schichten durch eine sinusförmige Anordnung von gewölbten Heizplatten geführt, die in Verbindung mit einer entsprechenden Spannung der Transportbänder, den erforderlichen Druck auf die Bahn ausüben. Anschließend werden die Schichten durch eine Heizwalze und darauffolgend durch eine Kühlwalze umgelenkt. Durch diese Vorrichtung wird eine kontinuierliche Bearbeitung vorgeschlagen.

Die DE 10 2008 021 796 B4 offenbart ein Verfahren zum Herstellen von Kunststoffplatten in einer kontinuierlichen Presse. Dabei ist ebenfalls zwischen einem oberen und unteren Transportband eine kontinuierliche Hindurchführung der Kunststoffbahnen vorgeschlagen. Analoges gilt für die DE 103 197 52 B2, US 4 670 080 A sowie für die US 4 897 147 A.

Der Erfindung liegt die Aufgabe zugrunde, ein Verfahren sowie eine Laminierstation zum Laminieren von mehreren folienartigen Schichten aus einem thermoplastischen Material zu einem homogenen Schichtverbund vorzuschlagen, bei welchem der Durchsatz unter Beibehaltung der Produktqualität, insbesondere unter Beibehaltung der Prozesszeit, erhöht wird.

Diese Aufgabe wird durch ein Verfahren zum Laminieren von mehreren folienartigen Schichten aus einem thermoplastischen Material zu einem homogenen Schichtverbund gelöst, bei dem eine Folienanordnung aus mehreren Schichten einer Heizstation zugeführt wird, bei welcher eine Prozessdauer zum Laminieren der Schichten zu einem Schichtverbund auf mehr als zwei aufeinanderfolgende Heizsegmente der Heizstation aufgeteilt wird, um die Schichten nach dem Durchlaufen der Heizsegmente der Heizstation als laminierter Schichtverbund an eine Kühlstation zu übergeben und bei dem der homogene Schichtverbund in der nachgeschalteten Kühlstation abgekühlt wird, wobei eine Anzahl von Kühlsegmenten in der Kühlvorrichtung um zumindest eine Zahl geringer als die Anzahl der Heizsegmente in der vorgeschalteten Heizstation ist und bei dem nach dem letzten Kühlsegment der Kühlstation der Schichtverbund einer weiteren Bearbeitungsstation oder Entnahmestation zugeführt wird. Dieses Verfahren weist den Vorteil auf, dass die einzelnen Taktzeiten der jeweiligen Heiz- oder Kühlsegmente verkürzt werden. Dabei kann innerhalb der Heizstation die gesamte Prozessdauer für das Aufheizen und Laminieren der Schichten zu einem Schichtverbund gleich bleiben, jedoch wird die Anzahl der Heizsegmente auf mehr als zwei erhöht. Dies ermöglicht, dass für jedes Heizsegment bei der erhöhten Anzahl von Heizsegmenten jeweils eine kürzere Taktzeit angesteuert wird als bei einer geringen Anzahl der Heizsegmente in der Heizstation. Dadurch wird ermöglicht, dass bei der Ausbildung der Kühlstation mit nur einem Kühlsegment bzw. zumindest einer Anzahl von Kühlsegmenten, die um zumindest eine Anzahl geringer ist als die Anzahl der Heizsegmente ist, der Gesamtzyklus um die Taktzeit eines Kühlsegmentes verkürzt werden kann. Dies führt zur Erhöhung des Durchsatzes der hergestellten Schichtverbünde. Erstaunlicherweise hat sich herausgestellt, dass die vorzeitige Entnahme des Schichtverbundes in einem noch nicht vollständig abgekühlten Zustand, wie beispielsweise auf Raumtemperatur, für die Qualität des Schichtverbundes nicht maßgeblich ist. Vielmehr kann dadurch die Produktivität aufgrund der Verkürzung des Gesamtzyklus erhöht werden. Auch können durch den Wegfall von zumindest einem Kühlsegment in der Kühlstation Kosten für die gesamte Laminierstation eingespart werden.

Gegenüber der aus dem Stand der Technik bekannten Laminierstation, bei welcher zwei Heizsegmente in einer Heizstation und nachfolgend zwei Kühlsegmente in einer Kühlstation vorgesehen sind, wird beispielsweise bei dem erfindungsgemäßen Verfahren nur ein Kühlsegment in der Kühlstation ausgebildet, und in der Heizstation sind statt zwei nun drei Heizsegmente vorgesehen. Bei diesem Ausführungsbeispiel ergibt sich, dass die für das Aufheizen erforderliche Zeit anstelle von zwei Takten nun auf drei Takte aufgeteilt wird. Dadurch lässt sich die Taktzeit für jedes Heizsegment für das Aufheizen um ein Drittel verkürzen, wodurch die Taktzeit in der Kühlstation verkürzt wird und sonst der Durchsatz entsprechend erhöht werden kann.

Bevorzugt sind die Taktzeiten der Heiz- und Kühlsegmente in der Heizstation und in der Kühlstation gleich. Die gesamte Prozessdauer für das Aufheizen der zu laminierenden Schichten in der Heizstation wird auf mehr als zwei Heizsegmente aufgeteilt, wodurch die jeweilige Taktzeit des Heizsegmentes reduziert wird. Dies ermöglicht, dass die Taktzeit des Kühlsegments oder der Kühlsegmente in der Kühlvorrichtung reduziert wird, wodurch eine Verkürzung der Gesamtprozessdauer zur Herstellung des Schichtverbundes erzielt wird. Zudem kann der Durchlauf je Zeiteinheit erhöht werden, indem eine geringere Anzahl von Kühlsegmenten im Vergleich zur Anzahl der Heizsegmente oder von nur einem einzigen Kühlsegment in der Kühlstation vorgesehen ist.

Bevorzugt werden die Heizsegmente in der Heizstation mit derselben Heiztemperatur angesteuert. Dadurch kann ein Überhitzen oder Schmelzen einer äußeren Schicht des zu bildenden Schichtverbundes verhindert werden.

Des Weiteren ist bevorzugt vorgesehen, dass der laminierte Schichtverbund in der Kühlstation abgekühlt und bei einer Temperatur des Schichtverbundes von größer 313K bereits aus der Kühlstation entnommen wird. Erstaunlicherweise hat sich gezeigt, dass ohne Beeinträchtigung der Qualität auch hinsichtlich Einprägungen an der jeweiligen Oberseite des Schichtverbundes eine Weiterverarbeitung des Schichtverbundes ermöglicht ist. Vorteilhafterweise wird der Schichtverbund nach dem Abkühlen auf einen Temperaturbereich zwischen 320K und 413K aus der Kühlstation herausgeführt.

Des Weiteren ist bevorzugt vorgesehen, dass die folienartigen Schichten taktweise durch die Heizstation und der in der Heizstation aus den Schichten laminierte bzw. gebildete Schichtverbund taktweise durch die Kühlstation hindurchgeführt werden. Dabei ist die Taktzeit innerhalb der Heizstation und innerhalb der Kühlstation dieselbe. Somit wird eine gleiche Taktung der einzelnen Heizsegmente und des zumindest einen Kühlsegments angesteuert.

Des Weiteren ist bevorzugt vorgesehen, dass die Taktzeit zum Laminieren der Schichten aus einer Gesamtaufheizdauer in der Heizstation bis zum Erreichen einer Laminiertemperatur für die folienartigen Schichten zu einem Schichtverbund dividiert durch die Anzahl der Heizsegmente der Heizstation gebildet wird. Dadurch kann die Gesamtheizdauer zum Aufheizen der folienartigen Schichten über deren jeweilige Glasübergangstemperatur gleich bleiben, wobei die Taktung innerhalb der Heizstation von Heizsegment zu Heizsegment verkürzt wird und somit eine Verkürzung der gesamten Prozessdauer erzielt werden kann.

Vorteilhafterweise ist vorgesehen, dass ausgehend von einer Heizstation mit zwei aneinander gereihten Heizsegmenten mit einer Taktzeit von 15 Sekunden je Heizsegment die Taktzeit bei Einsatz von drei Heizsegmenten auf jeweils 10 Sekunden reduziert wird. Dadurch wird die Verkürzung der Taktzeit für jedes Heizsegment offensichtlich. Insbesondere, sofern nur ein Kühlsegment in der Kühlstation vorgesehen ist, kann die Prozessdauer von beispielsweise zwei Kühlsegmenten je 15 Sekunden gemäß dem Stand der Technik auf nur 10 Sekunden reduziert sein.

Die der Erfindung zugrundeliegende Aufgabe wird des Weiteren durch eine Laminierstation zum Laminieren von mehreren folienartigen Schichten aus einem thermoplastischen Material zu einem homogenen Schichtverbund gelöst, bei der eine Heizstation zumindest zwei aneinandergereihte Heizsegmente umfasst und eine Kühlstation dem Heizsegment nachgeschalten ist, wobei die Anzahl der Kühlsegmente in der Kühlstation um wenigstens eine Zahl des Kühlsegments geringer als die Anzahl des Heizsegments ist und mit einer Steuerung sowohl die Heizsegmente und das wenigstens eine Kühlsegment mit gleichen Taktzeiten angesteuert ist. Die Laminierstation sieht vor, dass mehrere als bahnförmiges Material bereitgestellte Schichten als Folienanordnung zusammengeführt sind und zwischen einem oberen und unteren Laminierband durch die Heizstation und Kühlstation hindurchgeführt sind. Eine solche Laminierstation ermöglicht eine verlängerte Prozessdauer für das Aufheizen und Laminieren der folienartigen Schichten in der Heizstation als für die Kühlung, wobei die gesamte Prozessdauer reduziert werden kann. Dadurch kann das Aneinanderhaften oder Verschweißen der einzelnen folienartigen Schichten zur Bildung des homogenen Schichtverbundes verbessert werden. Gleichzeitig kann durch die Verkürzung der Kühlzeit eine Erhöhung der Produktivität erzielt werden.

Bevorzugt ist vorgesehen, dass der Heizstation vorgeschalten eine Bearbeitungsstation und der Kühlstation nachgeschalten eine Entnahmestation vorgesehen ist. Dies ermöglicht, dass während des Heizens und Kühlens der folienartigen Schichten in der Bearbeitungsstation ein Stapel aus folienartigen Schichten für die nachfolgende Laminierung bereitgestellt und gleichzeitig ein fertiggestellter homogener Schichtverbund in der Entnahmestation entnommen werden kann. Dadurch werden die Prozessnebenzeiten reduziert bzw. verhindert.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigt:

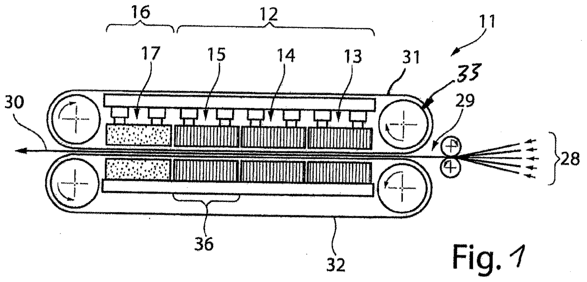

- Figur 1: eine schematische Seitenansicht einer weiteren alternativen Ausführungsform der Laminierstation.

Figur 1 zeigt eine schematische Ansicht auf eine Laminierstation 11. Diese Laminierstation 11 umfasst eine Heizstation 12 und eine dieser Heizstation 12 nachgeschaltene Kühlstation 16. Diese Laminierstation 11 umfasst des Weiteren ein oberes und unteres umlaufendes Transportband bzw. Laminierband 31, 32. Innerhalb des oberen und unteren umlaufenden Transportbandes 31, 32 ist jeweils ein oberer Teil und unterer Teil der Heizstation 12 und der Kühlstation 16 vorgesehen, so dass die Transportbänder 31 dazwischenliegend hindurchgeführt sind. Eingangsseitig zur Laminierstation 11 werden mehrere Schichten 28 als bahnförmiges Material zugeführt und durch ein Paar von Einlaufwalzen 33 zwischen die Laminierbänder 31, 32 geführt. Die Heizsegmente 13, 14, 15 der Heizstation 12 bestehen aus einem oberen und/oder unteren bewegbaren Pressenteil. Das Kühlsegment 17 der Kühlstation 16 besteht ebenfalls aus einem oberen und/oder unteren bewegbaren Pressenteil. Die oberen und/oder unteren Pressteile der Heizsegmente 13, 14, 15 und/oder des zumindest einen Kühlsegments 17 werden durch Antriebe, insbesondere Zylinder 34, vorzugsweise zeitgleich, aufeinander zubewegt. Vorzugsweise werden durch ein oberes Pressenteil die oberen Heizsegmente 13, 14, 15 und das zumindest eine obere Kühlsegment 17 und durch das untere Pressenteil die unteren Heizsegmente 13, 14, 15 und das zumindest eine Kühlsegment 17 aufeinander zubewegt. Jeweils dazwischenliegend werden die Laminierbänder 31, 32 hindurchgeführt. Das Hindurchführen der Schichten 28 durch die Heizstation 12 und das Hindurchführen des gebildeten Schichtverbundes 30 durch die Kühlstation 16 erfolgt taktweise. Der taktweise Vorschub entspricht beispielsweise einer Länge 36 der jeweiligen Heizsegmente 13, 14, 15 und des zumindest einen Kühlsegments 17. Die Heizsegmente 13, 14, 15 und das Kühlsegment 17 sind bezüglich deren Länge gleich ausgebildet.

Auch bei dieser Laminierstation 11 ist vorgesehen, dass die Anzahl der Kühlsegmente 17 um zumindest eine Zahl geringer als die Anzahl der Heizsegmente 13, 14 ist, wobei zumindest ein Kühlsegment 17 in der Kühlstation 16 vorhanden ist.

Dieser Schichtverbund 30 kann als ein Dokumentenkörper, insbesondere als ein Sicherheits- oder Wertdokument ausgebildet sein. Auch weitere Identifikationsdokumente oder Scheckkarten, VISA-Karten oder dergleichen können durch den Schichtverbund gebildet werden. Im Fall eines Sicherheitsdokumentenkörpers kann beispielsweise ein ID3-Dokument oder ein ID1-Dokument vorgesehen sein. Das ID1- oder ID3-Dokument kann beispielsweise aus drei bis fünfzehn Schichten bestehen. Auch können Sicherheitsdokumente mit einem RFID-Chip oder anderen elektronischen Bauelementen, sogenannten Inlays zwischen den einzelnen Schichten oder innerhalb der oder den Schichten vorgesehen sein, die nach dem Laminieren einen Schichtverbund, bzw. einen Verbundkörper bilden.

Als Schichten 28 für einen solchen Schichtverbund 30 werden beispielsweise thermoplastische Schichten eingesetzt, insbesondere Polycarbonat. Weitere Materialien, die durch Druck und Temperaturen mit einem weiteren Material laminiert werden können, kommen ebenso zum Einsatz.

Bei dieser Laminierstation 11 ist vorgesehen, dass die Anzahl der Heizsegmente 13, 14, 15 um zumindest eine Zahl größer als die Anzahl der Kühlsegmente 17 ist. Bei drei Heizsegmenten 13, 14, 15 sind somit nur zwei Kühlsegmente 17, vorgesehen. Auch kann nur ein einziges Kühlsegment 17 vorgesehen sein. Sofern vier Heizsegmente in der Heizstation 12 vorgesehen sind, können drei, zwei oder auch nur ein Kühlsegment 17 vorgesehen sein.

Der homogene Schichtverbund 30 wird aus der Kühlstation 16 bereits bei gegenüber der Laminiertemperatur abgekühlten Temperaturen von größer 313K herausgeführt. Vorzugsweise ist ein Temperaturbereich von 320K bis 413K vorgesehen, bei dem der homogene Schichtverbund 30 aus der Kühlstation 16 entnommen wird. Durch diesen Aufbau der Laminierstation 11 zu Figur 1 als auch der vorzeitigen Entnahme des Schichtverbundes 30 mit einer Temperatur, die oberhalb einer Raumtemperatur liegt, kann eine erhebliche Steigerung in der Produktivität durch eine Taktzeitreduzierung erfolgen.

### Bezugszeichenliste

- 11.: Laminierstation
- 12.: Heizstation
- 13.: Heizsegment
- 14.: Heizsegment
- 15.: Heizsegment
- 16.: Kühlstation
- 17.: Kühlsegment
- 19.: Rundtakttisch
- 20.: Bestückungsstation
- 21.: Entnahmestation
- 23.: Folienheft
- 24.: Laminierblech
- 25.: Laminierblech
- 26.: Laminierkassette
- 28.: mehrere Schichten
- 29.: Folienanordnung
- 30.: Schichtverbund
- 31.: Transportband
- 32.: Transportband
- 33.: Einlaufwalze
- 36.: Vorschub

## Patentansprüche

1. Verfahren zum Laminieren von mehreren folienartigen Schichten (28) aus einem thermoplastischen Material zu einem homogenen Schichtverbund (30),
- bei dem mehrere als bahnförmiges Material bereitgestellte Schichten (28) zu einer Folienanordnung (29) zueinander ausgerichtet werden,
- bei dem die Folienanordnung (29) einer Heizstation (12) zugeführt wird, welche mehrere Heizsegmente (13,14,15) umfasst, welche aus einem oberen und einem unteren Pressenteil bestehen und
- bei dem der Schichtverbund (30) in einer nachgeschalteten Kühlstation (16) abgekühlt wird, welches zumindest ein Kühlsegment (17) umfasst, welches aus einem oberen und einem Unteren Pressenteil besteht,
- bei dem das obere und/oder das untere Pressenteil der Heizsegmente (13,14,15) und des zumindest einen Kühlsegmentes (17) durch einen Antrieb aufeinander zubewegt wird, und
- bei dem nach dem letzten Kühlsegment (17) der Kühlstation (16) der Schichtverbund (30) einer weiteren Bearbeitungsstation oder Entnahmestation (21) zugeführt wird **dadurch gekennzeichnet,**
- **dass** eine Prozessdauer in der Heizstation (12) zum Laminieren der Schichten (28) zu einem Schichtverbund (30) auf mehr als zwei aufeinanderfolgende Heizsegmente (13, 14, 15) in der Heizstation (12) aufgeteilt wird, um die Schichten (28) nach dem Durchlaufen der Heizsegmente (13, 14) als laminierter Schichtverbund (30) an eine Kühlstation (16) überzuführen,
- **dass** eine Anzahl von Kühlsegmenten (17) in der Kühlstation (16) um zumindest eine Zahl geringer als die Anzahl der Heizsegmente (13, 14, 15) in der vorgeschalteten Heizstation (12) ist, und
- **dass** die Heizsegmente (13, 14, 15) und das wenigstens eine Kühlsegment (17) mit gleichen Taktzeiten für den Heiz- oder Kühlprozess angesteuert werden.

2. Verfahren nach Anspruch 1, **dadurch gekennzeichnet, dass** die Heizsegmente (13, 14, 15) der Heizstation (12) auf dieselbe Heiztemperatur aufgeheizt werden.

3. Verfahren nach einem der vorhergehenden Ansprüche, **dadurch gekennzeichnet, dass** der homogene Schichtverbund in der Kühlstation (16) abgekühlt und bei einer Abkühltemperatur des Schichtverbundes von größer 313K, vorzugsweise in einem Temperaturbereich zwischen 320K und 413K, aus der Kühlstation (16) entnommen wird.

4. Verfahren nach einem der vorhergehenden Ansprüche, **dadurch gekennzeichnet, dass** die Schichten (28) taktweise durch die Heizstation (12) und der in der Heizstation (12) gebildete Schichtverbund (30) taktweise durch die Kühlstation (16) hindurchgeführt werden.

5. Verfahren nach einem der vorhergehenden Ansprüche, **dadurch gekennzeichnet, dass** sich die Taktzeit zum Laminieren der Schichten (28) aus einer Gesamtaufheizdauer in der Heizstation (12) bis zum Erreichen einer Laminiertemperatur der folienartigen Schichten (28) zu einem Schichtverbund (30) dividiert und durch die Anzahl der Heizsegmente (13, 14, 15) in der Heizstation (12) gebildet wird.

6. Verfahren nach einem der vorhergehenden Ansprüche, **dadurch gekennzeichnet, dass** ausgehend von einer Heizstation (12) mit zwei aneinander gereihten Heizsegmenten (13, 14) mit einer Taktzeit von 15 Sekunden je Heizsegment (13, 14) , die Taktzeit bei einer Heizstation (12) mit drei aufeinanderfolgenden Heizsegmenten (13, 14, 15) auf 10 Sekunden reduziert wird.

7. Laminierstation zum Laminieren von mehreren folienartigen Schichten (28) aus einem thermoplastischen Material zu einem homogenen Schichtverbund (30),
- mit einer Heizstation (12), welche mehrere Heizsegmente (13, 14, 15) umfasst, die aus einem oberen und einem unteren Pressenteil bestehen und
- mit einer Kühlstation (16), welche der Heizstation (12) nachgeschalten ist und zumindest ein Kühlsegment (17) umfasst, das aus einem oberen und einem unteren Pressenteil besteht,
- wobei das obere und/oder das untere Pressenteil der Heizsegmente (13,14,15) und des zumindest einen Kühlsegmentes (17) durch einen Antrieb aufeinander zubewegbar sind,
- mehrere als bahnförmiges Material bereitgestellte Schichten (28) zu einer Folienanordnung (29) zusammengeführt und zwischen einem oberen und einem unteren umlaufenden Laminierband (31, 32) durch die Heizstation (12) und die Kühlstation (16) hindurchgeführt sind, und
- mit einer Steuerung, welche die Heizsegmente (13, 14, 15) und das wenigstens eine Kühlsegment (17) ansteuert,
**dadurch gekennzeichnet,**
- **dass** die Heizstation (12) zum Laminieren der Schichten (28) zu einem Schichtverbund (30) auf mehr als zwei aufeinanderfolgende Heizsegmente (13, 14, 15) aufgeteilt ist, und die Schichten (28) nach dem Durchlaufen der Heizsegmente (13, 14) als laminierter Schichtverbund (30) an die Kühlstation (16) überführbar sind,
- **dass** eine Anzahl von Kühlsegmenten (17) in der Kühlstation (16) um zumindest eine Zahl geringer als die Anzahl der Heizsegmente (13, 14, 15) in der vorgeschalteten Heizstation (12) ist, und
- **dass** die Heizsegmente (13, 14, 15) und das wenigstens eine Kühlsegment (17) mit gleichen Taktzeiten für den Heiz- oder Kühlprozess angesteuert sind.

8. Laminierstation nach Anspruch 7, **dadurch gekennzeichnet, dass** der Heizstation (12) vorgeschalten eine Bestückungsstation (20) und der Kühlstation (16) nachgeschalten eine Entnahmestation (21) vorgesehen ist.

9. Laminierstation nach Anspruch 7 oder 8, **dadurch gekennzeichnet, dass** das obere und untere Laminierband (31, 32) die Schichten (28) taktweise durch die Heizstation (12) und den Schichtverbund (30) taktweise durch die Kühlstation (16) hindurchführt.

10. Laminierstation nach einem der Ansprüche 7 bis 9, **dadurch gekennzeichnet, dass** bei der taktweise Hindurchführung der Schichten (28) und des Schichtverbundes (30) ein Vorschub vorgesehen ist, der einer Länge (36) der jeweiligen Heizsegmente (13, 14, 15) und des zumindest einen Kühlsegmentes (17) entspricht.

## Claims

1. Method for laminating a plurality of film-like layers (28) of a thermoplastic material to form a homogeneous laminate (30),
- in which a plurality of layers (28) provided as web-like material are aligned with respect to one another to form a film arrangement (29),
- in which the film arrangement (29) is fed to a heating station (12) which comprises a plurality of heating segments (13, 14, 15) consisting of an upper and a lower press part, and
- in which the layer composite (30) is cooled in a downstream cooling station (16), which comprises at least one cooling segment (17) consisting of an upper and a lower press part,
- in which the upper and/or the lower press part of the heating segments (13, 14, 15) and of the at least one cooling segment (17) are moved towards one another by a drive, and
- in which, after the last cooling segment (17) of the cooling station (16), the layer composite (30) is fed to a further processing station or removal station (21)
**characterized in that**
- a process duration in the heating station (12) for laminating the layers (28) to form a layer composite (30) is divided between more than two successive heating segments (13, 14, 15) in the heating station (12) in order to transfer the layers (28) as a laminated layer composite (30) to a cooling station (16) after passing through the heating segments (13, 14),
- a number of cooling segments (17) in the cooling station (16) is at least one less than the number of heating segments (13, 14, 15) in the upstream heating station (12), and
- the heating segments (13, 14, 15) and the at least one cooling segment (17) are controlled with the same cycle times for the heating or cooling process.

2. Method according to claim 1, **characterized in that** the heating segments (13, 14, 15) of the heating station (12) are heated to the same heating temperature.

3. Method according to one of the preceding claims, **characterized in that** the homogeneous layer composite is cooled in the cooling station (16) and is removed from the cooling station (16) at a cooling temperature of the layer composite of greater than 313K, preferably in a temperature range between 320K and 413K.

4. Method according to one of the preceding claims, **characterized in that** the layers (28) are passed through the heating station (12) in cycles and the layer composite (30) formed in the heating station (12) is passed through the cooling station (16) in cycles.

5. Method according to one of the preceding claims, **characterized in that** the cycle time for laminating the layers (28) is divided from a total heating time in the heating station (12) until a lamination temperature of the film-like layers (28) is reached to form a layer composite (30) and is formed by the number of heating segments (13, 14, 15) in the heating station (12).

6. Method according to one of the preceding claims, **characterized in that**, starting from a heating station (12) with two heating segments (13, 14) arranged in a row with a cycle time of 15 seconds per heating segment (13, 14), the cycle time is reduced to 10 seconds in the case of a heating station (12) with three consecutive heating segments (13, 14, 15).

7. Laminating station for laminating a plurality of film-like layers (28) of a thermoplastic material to form a homogeneous laminate (30)
- with a heating station (12), which comprises a plurality of heating segments (13, 14, 15) consisting of an upper and a lower press part, and
- with a cooling station (16), which is connected downstream of the heating station (12) and comprises at least one cooling segment (17), which consists of an upper and a lower press part,
- wherein the upper and/or the lower press part of the heating segments (13, 14, 15) and of the at least one cooling segment (17) can be moved towards each other by a drive,
- a plurality of layers (28) provided as web-like material are brought together to form a film arrangement (29) and are guided between an upper and a lower circulating laminating belt (31, 32) through the heating station (12) and the cooling station (16), and
- with a control system which controls the heating segments (13, 14, 15) and the at least one cooling segment (17),
**characterized in that**
- the heating station (12) for laminating the layers (28) to form a layer composite (30) is divided into more than two successive heating segments (13, 14, 15), and the layers (28) can be transferred to the cooling station (16) as a laminated layer composite (30) after passing through the heating segments (13, 14),
- a number of cooling segments (17) in the cooling station (16) is at least one less than the number of heating segments (13, 14, 15) in the upstream heating station (12), and
- the heating segments (13, 14, 15) and the at least one cooling segment (17) are controlled with the same cycle times for the heating or cooling process.

8. Laminating station according to claim 7, **characterized in that** a loading station (20) is provided upstream of the heating station (12) and a removal station (21) is provided downstream of the cooling station (16).

9. Laminating station according to claim 7 or 8, **characterized in that** the upper and lower laminating belt (31, 32) passes the layers (28) in cycles through the heating station (12) and the layer composite (30) in cycles through the cooling station (16) .

10. Laminating station according to one of claims 7 to 9, **characterized in that**, when the layers (28) and the layer composite (30) are passed through in cycles, a feed is provided which corresponds to a length (36) of the respective heating segments (13, 14, 15) and of the at least one cooling segment (17) .

## Revendications

1. Procédé de laminage de plusieurs couches (28) en forme de feuille en un matériau thermoplastique en un ensemble de couches (30) homogène,
- dans lequel plusieurs couches (28) préparées sous forme de matériau en bande sont alignées les unes par rapport aux autres pour former un ensemble de feuilles (29),
- dans lequel l'agencement de feuilles (29) est amené à une station de chauffage (12) qui comprend plusieurs segments de chauffage (13, 14, 15) qui se composent d'une partie de presse supérieure et d'une partie de presse inférieure et
- dans lequel le composite stratifié (30) est refroidi dans une station de refroidissement (16) placée en aval, qui comprend au moins un segment de refroidissement (17), qui se compose d'une partie de presse supérieure et d'une partie de presse inférieure,
- dans lequel la partie de presse supérieure et/ou la partie de presse inférieure des segments de chauffage (13, 14, 15) et du au moins un segment de refroidissement (17) sont déplacées l'une vers l'autre par un entraînement, et
- dans lequel, après le dernier segment de refroidissement (17) de la station de refroidissement (16), le composite stratifié (30) est amené à une autre station de traitement ou station de prélèvement (21).
**caractérisé en ce que**
- qu'une durée de processus dans la station de chauffage (12) pour la stratification des couches (28) en un composite stratifié (30) est répartie sur plus de deux segments de chauffage successifs (13, 14, 15) dans la station de chauffage (12), afin de transférer les couches (28) après le passage des segments de chauffage (13, 14) sous forme de composite stratifié (30) à une station de refroidissement (16),
- qu'un nombre de segments de refroidissement (17) dans la station de refroidissement (16) est inférieur d'au moins un nombre au nombre de segments de chauffage (13, 14, 15) dans la station de chauffage (12) placée en amont, et
- les segments de chauffage (13, 14, 15) et le au moins un segment de refroidissement (17) sont commandés avec des temps de cycle identiques pour le processus de chauffage ou de refroidissement.

2. Procédé selon la revendication 1, **caractérisé en ce que** les segments de chauffage (13, 14, 15) de la station de chauffage (12) sont chauffés à la même température de chauffage.

3. Procédé selon l'une des revendications précédentes, **caractérisé en ce que** le composite stratifié homogène est refroidi dans la station de refroidissement (16) et est retiré de la station de refroidissement (16) à une température de refroidissement du composite stratifié supérieure à 313K, de préférence dans une plage de température comprise entre 320K et 413K.

4. Procédé selon l'une des revendications précédentes, **caractérisé en ce que** les couches (28) passent de manière cyclique à travers le poste de chauffage (12) et le composite de couches (30) formé dans le poste de chauffage (12) passe de manière cyclique à travers le poste de refroidissement (16).

5. Procédé selon l'une des revendications précédentes, **caractérisé en ce que** le temps de cycle pour la stratification des couches (28) est divisé par une durée totale de chauffage dans la station de chauffage (12) jusqu'à l'obtention d'une température de stratification des couches en forme de feuille (28) en un ensemble de couches (30) et est formé par le nombre de segments de chauffage (13, 14, 15) dans la station de chauffage (12).

6. Procédé selon l'une des revendications précédentes, **caractérisé en ce que**, en partant d'une station de chauffage (12) avec deux segments de chauffage (13, 14) alignés l'un à côté de l'autre avec un temps de cycle de 15 secondes par segment de chauffage (13, 14), le temps de cycle est réduit à 10 secondes pour une station de chauffage (12) avec trois segments de chauffage (13, 14, 15) successifs.

7. Poste de laminage pour laminer plusieurs couches (28) en forme de feuilles d'un matériau thermoplastique en un ensemble de couches (30) homogène,
- avec une station de chauffage (12), qui comprend plusieurs segments de chauffage (13, 14, 15), qui se composent d'une partie de presse supérieure et d'une partie de presse inférieure et
- avec une station de refroidissement (16) qui est montée en aval de la station de chauffage (12) et qui comprend au moins un segment de refroidissement (17) qui est constitué d'une partie de presse supérieure et d'une partie de presse inférieure,
- la partie de presse supérieure et/ou la partie de presse inférieure des segments de chauffage (13, 14, 15) et du au moins un segment de refroidissement (17) pouvant être déplacées l'une vers l'autre par un entraînement,
- plusieurs couches (28) mises à disposition sous forme de matériau en bande sont réunies pour former un agencement de feuilles (29) et sont guidées entre une bande de laminage supérieure et une bande de laminage inférieure en circulation (31, 32) à travers le poste de chauffage (12) et le poste de refroidissement (16), et
- avec une commande qui commande les segments de chauffage (13, 14, 15) et le au moins un segment de refroidissement (17),
**caractérisé en ce que**
- la station de chauffage (12) est répartie sur plus de deux segments de chauffage successifs (13, 14, 15) pour laminer les couches (28) en un composite stratifié (30), et les couches (28) peuvent être transférées à la station de refroidissement (16) sous forme de composite stratifié (30) après avoir traversé les segments de chauffage (13, 14),
- qu'un nombre de segments de refroidissement (17) dans la station de refroidissement (16) est inférieur d'au moins un nombre au nombre de segments de chauffage (13, 14, 15) dans la station de chauffage (12) placée en amont, et
- les segments de chauffage (13, 14, 15) et le au moins un segment de refroidissement (17) sont commandés avec des temps de cycle identiques pour le processus de chauffage ou de refroidissement.

8. Poste de laminage selon la revendication 7, **caractérisé en ce qu'**il est prévu un poste de garnissage (20) en amont du poste de chauffage (12) et un poste de prélèvement (21) en aval du poste de refroidissement (16).

9. Poste de laminage selon la revendication 7 ou 8, **caractérisé en ce que** les bandes de laminage supérieure et inférieure (31, 32) font passer les couches (28) de manière cadencée à travers le poste de chauffage (12) et le composite de couches (30) de manière cadencée à travers le poste de refroidissement (16).

10. Poste de laminage selon l'une des revendications 7 à 9, **caractérisé en ce que**, lors du passage cadencé des couches (28) et du composite de couches (30), il est prévu une avance qui correspond à une longueur (36) des segments de chauffage respectifs (13, 14, 15) et du au moins un segment de refroidissement (17).
